# FASCICULE DE BREVET EUROPEEN

(11) **EP 0 415 800 B1**
(45) Date de publication et mention de la délivrance du brevet: **10.03.1993**
(21) Numéro de dépôt: 90400318.3
(22) Date de dépôt: 06.02.1990
(51) Int. Cl.: A23L 1/325

(54) **Bloc alimentaire de chair de poisson, moule et procédé pour sa réalisation**
Nahrungsmittelblock aus Fischfleisch, Pressform und Verfahren zu seiner Herstellung
Food block from fish meat, press mould and process for its realization

(30) Priorité: 01.08.1989 FR 8910347
(43) Date de publication de la demande: 06.03.1991
(73) Titulaire: LA CUISINE MODERNE, S.A., F-14960 PONT-D'OUILLY (FR)
(72) Inventeur: Diaz, André, F-14700 FALAISE (FR)
(74) Mandataire: Hirsch, Marc-Roger

(56) Documents cités:
- DE-A- 3 402 611
- PATENT ABSTRACTS OF JAPAN vol. 10, no. 249 (M-511)(2305), 27.08.86
- PATENT ABSTRACTS OF JAPAN vol. 9, no. 331 (C-321)(2054), 25.12.1985

## Description

La présente invention se rapporte à un bloc alimentaire de chair de poisson sans peau ni arêtes, en particulier de saumon, ainsi qu'à un moule et à un procédé pour sa réalisation.

Il est déjà connu (voir par exemple DE-A-3 402 611) de constituer des blocs destinés à l'alimentation humaine à partir de morceaux de chair de poissons, en particulier de saumon, préalablement dépouillés et débarrassés de leurs arêtes, puis agglomérés par compression.

La présente invention a pour objet la confection de blocs de ce genre mais qui présentent un aspect plus attrayant que ceux réalisés jusque là. Elle vise aussi un moule et son procédé d'utilisation pour la confection particulièrement simple de tels blocs.

Le bloc de chair de poisson selon l'invention, constitué de morceaux de chair préalablement débarrassés d'arêtes, puis agglomérés par compression, est caractérisé en ce qu'il présente sensiblement la forme d'un prisme droit dont la section transversale reproduit le contour d'une darne de poisson munie d'au moins un évidement longitudinal correspondant, par exemple, à la cavité abdominale ou à l'arête dorsale du poisson. Le bloc de chair de poisson, notamment de saumon, qui présente l'évidement caractéristique correspondant à la cavité abdominale d'une tranche de poisson, peut être ensuite découpé en tranches. Chacune de celles-ci évoque une darne, c'est-à-dire une tranche de poisson, et revêt ainsi un caractère particulièrement esthétique et attractif. Un autre intérêt d'une telle tranche est d'être en outre, dépourvue de toute arête et de peau et donc d'être entièrement et aisément consommable, notamment par les enfants pour qui les arêtes présentent toujours de grands risques.

L'invention prévoit également un moule pour la confection du bloc alimentaire destiné à recevoir les morceaux de chair de poisson à comprimer et à agglomérer, ce moule étant caractérisé en ce qu'il comprend un corps de moule et un couvercle de moule emboîté dans celui-ci, des moyens de serrage dudit couvercle sur la masse de morceaux de chair dans le corps de moule, et un noyau à section à contour en forme générale d'ellipse aplatie pour ménager l'évidement du bloc, ledit noyau étant fixé de manière amovible en contact avec le fond du corps de moule par une extrémité arrondie de la section en ellipse à l'aide de vis accessibles de l'extérieur dudit corps et traversant les parois transversales d'extrémité de ce corps. Les moyens de serrage consistent, de préférence, en un étrier formé d'une barre aux extrémités de laquelle sont articulés des bras munis de crémaillères dont les dents sont en prise avec des rampes de corps de moule, des ressorts de compression étant disposés entre ladite barre et le couvercle du moule.

Le procédé de fabrication du bloc alimentaire dans le moule consiste, selon l'invention, à sortir le bloc alimentaire du corps de moule avec le noyau retenu en contre-dépouille, l'extraction du noyau s'effectuant ensuite par coulissement latéral.

D'autres buts, caractéristiques et avantages apparaîtront à la lecture de la description d'un mode de réalisation de l'invention faite à titre d'exemple non limitatif et en référence au dessin annexé, dans lequel:
- la figure 1 est une vue partielle en perspective d'une forme d'exécution du bloc alimentaire selon l'invention;
- la figure 2 est une vue en perspective, avec coupes et arrachements, d'une forme de réalisation du moule selon l'invention pour la confection du bloc de la figure 1;
- la figure 3 est une vue partielle, en élévation avec arrachements, du moule de la figure 2 avec ses moyens de mise en compression.

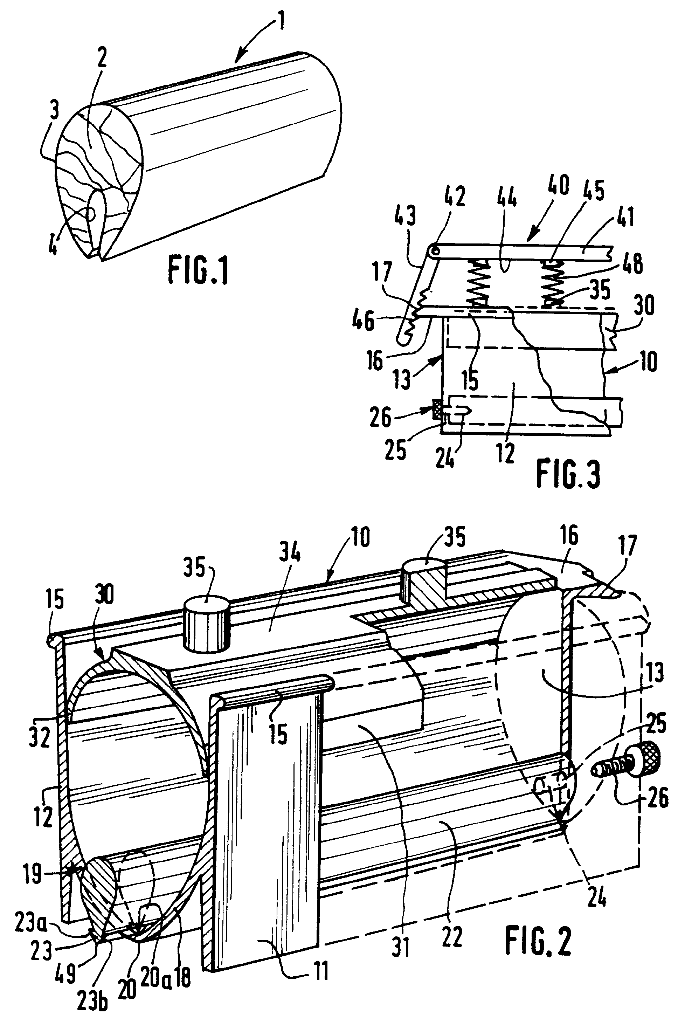

Dans la forme d'exécution de la figure 1, le bloc alimentaire 1 selon l'invention présente d'une manière générale, la forme d'un prisme droit dont la section transversale 2 reproduit le contour d'une darne, c'est-à-dire d'une tranche de gros poisson tel qu'un saumon ou un thon, avec un contour extérieur 3 globalement ovoïdal ou à section à contour en forme générale d'ellipse aplatie, et à sa partie inférieure un évidement 4 à fond arrondi, évoquant la cavité abdominale que présente une telle darne après que le poisson ait été vidé. D'autres évidements pourraient être prévus correspondant, par exemple, à l'enlèvement de l'arête dorsale du poisson.

La matière du bloc 1 est constituée de morceaux de chair de poisson, par exemple de saumon, comprimés et agglomérés après avoir été débarrassés de leurs peaux et arêtes. Pour améliorer l'attractivité et le caractère naturel du produit, on pourra utiliser, pour un même bloc alimentaire, les morceaux d'un seul et même poisson qui se trouvera ainsi reconstitué en forme de darne sans différence de chair entre les divers tronçons de la darne.

La figure 2 montre en perspective avec coupes et arrachements une forme de réalisation du moule utilisé pour la confection du bloc de la figure 1.

Le noyau présente la forme générale d'un profil aérodynamique dont la queue se termine du côté en contact avec le moule (prolongement) par deux faces en biseaux formant une arête qui vient s'appliquer sur l'arête intérieure des deux parois inférieures du corps de moule.

Le moule comprend un corps 10, de forme générale parallélépipédique, avec deux flasques latéraux parallèles et verticaux 11 et 12, qui réunissent deux parois transversales verticales d'extrémité dont seule l'une d'entre elles, 13 est représentée. Une bordure périphérique supérieure 15 dirigée vers l'extérieur, prolonge horizontalement le bord supérieur des flasques 11, 12 et présente une section hémicylindrique. Les parois d'extrémité 13 comportent à leur bord supérieur une patte 16 munie, dans sa partie médiane, sur sa face supérieure, d'une rampe 17 inclinée vers le bas et vers l'extérieur. On reviendra plus loin sur le rôle de cette rampe.

Le fond proprement dit du moule est formé par deux parois 18, 19 partant respectivement de la face intérieure des flasques 11 et 12 prolongeant cette face intérieure sous la région médiane desdits flasques et se rejoignant selon une arête 20 dans le plan médian parallèle à ces deux flasques. La section transversale de ces deux parois 18 et 19 forme une ogive et la partie inférieure de l'arête 20 est située au dessus des pieds sur lesquels repose le moule. Le moule comporte également un noyau amovible 22, de forme allongée, présentant une section approximativement ovoïdale c'est-à-dire dont le contour est en forme générale d'ellipse aplatie ou bien de corps aérodynamique, symétrique par rapport à un plan vertical, la longueur de ce noyau étant légèrement inférieure à la distance séparant les faces intérieures des parois transversales d'extrémité 13. Le noyau 20 repose en position de montage sur le fond du moule par une extrémité de forme générale arrondie de la section en ellipse en épousant par un prolongement 23 de sa partie inférieure le contour en ogive des parois 18, 19. La partie inférieure 23 présente deux faces en biseaux 23a et 23b qui forment une arête 49 venant en appui sur l'arête intérieure 20a des parois 18 et 19 pour bien centrer le noyau 22 dans l'espace inférieur du moule. Pour la fixation amovible du noyau sur le fond du moule, à chacune des extrémités de ce noyau est ménagé un alésage axial taraudé 24 (figure 3), en regard d'un trou 25 pratiqué dans la paroi transversale associée 13 du moule. Une vis 26, par exemple à tête moletée, traverse le trou 25 et est vissée dans l'alésage 24 pour assurer la fixation du noyau.

Le moule selon l'invention est complété par un couvercle de fermeture 30, à section transversale en forme de voûte, symétrique selon un plan vertical les bords latéraux de ce couvercle présentant chacun une face plane 31, 32, qui, en position de fermeture du moule (figure 2) vient en regard, avec un léger jeu, de la face intérieure du flasque correspondant respectif 11 et 12. La longueur du couvercle 30 correspond seulement à la distance entre les parois transversales de moule. Sur sa face supérieure, le couvercle 30 présente sur toute sa longueur une nervure longitudinale 34 et, en saillie sur celle-ci, une série de plots cylindriques 35.

Le noyau 22 étant fixé au fond du moule et ce dernier étant convenablement rempli de morceaux de chair de poisson, le couvercle est mis en place puis rapproché du fond du moule, ce qui assure la compression des morceaux de chair et leur agglomération. La masse ainsi comprimée occupe le volume existant entre les parois intérieures du moule 10 et du couvercle 30 et la surface extérieure du noyau 22.

Pour maintenir sous pression la masse de chair, l'invention prévoit des moyens de serrage représentés schématiquement en 40 (figure 3). Les moyens de serrage 40 consistent par exemple en un étrier formé d'une barre 41, s'étendant sensiblement sur la longueur totale du corps 10 du moule et à chacune des extrémités de laquelle est articulé, autour d'un axe 42 un bras 43. Les axes 42 sont parallèles et viennent se placer horizontalement en position d'utilisation des moyens de serrage.

La barre 41 porte sur sa face inférieure 44 destinée à venir en regard de la nervure supérieure 34 du couvercle 30, des tétons 45 dont le nombre et la position correspondent à ceux des tétons portés par ladite nervure.

Par ailleurs, chacun des bras 43 porte, sur sa face adjacente à la face 44, une crémaillère 46 dont les dents sont adaptées pour coopérer avec la rampe 17 ménagée à chaque extrémité du corps de moule. Des ressorts hélicoïdaux 48 sont disposés entre le couvercle 30 et la barre 41, chaque ressort étant retenu et guidé par un plot 35 et un téton 45 de ce couvercle et de cette barre.

Quand le couvercle 30 est en place au-dessus de la masse de chair emplissant le moule, il suffit de rabattre chacun des bras 43 au contact de la patte 16 associée, la crémaillère 46 venant enclencher la rampe 17, puis d'abaisser la barre 40 en maintenant le contact entre la rampe et la crémaillère jusqu'à mise sous pression convenable des ressorts 48.

La compression est ensuite maintenue pendant le temps nécessaire à l'agglomération des morceaux de chair de poisson. On libère ensuite le couvercle 30 en écartant les bras 43 vers l'extérieur et on ôte ce couvercle. On dévisse et dégage les vis 26 de maintien du noyau 22, ce qui permet d'extraire le bloc de chair aggloméré 1 qui retient en contre-dépouille le noyau 22.

Il ne reste plus ensuite qu'à extraire le noyau 22 par coulissement latéral pour obtenir le bloc à section en forme de darne de la figure 1, qui peut être conditionné sous cette forme ou tronçonné en tranches prêtes à la cuisson.

## Revendications

1. Bloc alimentaire de chair de poisson formé de morceaux de chair préalablement débarrassés de peau et d'arêtes puis agglomérés par compression, caractérisé en ce qu'il présente sensiblement la forme d'un prisme droit dont la section transversale (2) reproduit le contour d'une darne de poisson munie d'au moins un évidement (4) longitudinal.

2. Bloc selon la revendication 1, caractérisé en ce que l'évidement correspond à la cavité abdominale.

3. Bloc selon la revendication 1 ou 2, caractérisé en ce que l'évidement correspond à l'arête dorsale.

4. Darne ou tranche de poisson obtenue par tronçonnage du bloc selon l'une quelconque des revendication 1 à 3.

5. Moule pour la confection d'un bloc alimentaire selon l'une quelconque des revendications 1 à 3, destiné à recevoir les morceaux de chair de poisson à comprimer et à agglomérer, caractérisé en ce qu'il comprend un corps de moule (10) et un couvercle de moule (30) emboîté dans celui-ci, des moyens de serrage (40) dudit couvercle (30) sur la masse des morceaux de chair dans le corps de moule (10) et un noyau (22) à section à contour en forme générale d'ellipse aplatie pour ménager l'évidement du bloc, et en ce que ledit noyau (22) est fixé de manière amovible en contact avec le fond du corps de moule par une extrémité de forme générale arrondie de la section en ellipse à l'aide de vis (26) accessibles de l'extérieur dudit corps (10) et traversant les parois transversales d'extrémité (13) de ce corps.

6. Moule selon la revendication 5, caractérisé en ce que les moyens de serrage (40) consistent en un étrier formé d'une barre (41) aux extrémités de laquelle sont articulés des bras (43) munis de crémaillères (46) dont les dents sont en prise avec des rampes (17) du corps de moule (10), des ressorts de compression (48) étant disposés entre ladite barre (44) et le couvercle (30) du moule.

7. Moule selon la revendication 5 ou 6, caractérisé en ce que le noyau (22) présente la forme générale d'un profil aérodynamique dont la queue se termine du côté en contact avec le moule (prolongement 23) par deux faces en biseaux (23a et 23b) formant une arête (49) qui vient s'appliquer sur l'arête intérieure (20a) des deux parois inférieures (18 et 19) du corps de moule (10).

8. Procédé de fabrication du bloc alimentaire selon l'une quelconque des revendications 1 à 3, dans le moule selon l'une des revendications 3 à 5, caractérisé en ce que le bloc (1) est sorti du corps de moule (10) avec le noyau (22) retenu en contre-dépouille, l'extraction du noyau s'effectuant ensuite par coulissement longitudinal.

## Claims

1. Food block from fish meat formed from pieces of fish meat from which skin and bones have previously been removed and which are then agglomerated by compression, characterized in that it is substantially in the shape of a straight prism the cross-section (2) of which reproduces the shape of a transverse slice of a fish incorporating at least one longitudinal hollow (4).

2. Block according to claim 1, characterized in that the hollow corresponds to the abdominal cavity.

3. Block according to claim 1 or 2, characterized in that the hollow corresponds to the backbone.

4. A steak or slice of fish obtained by slicing the block according to any of claims 1 to 3.

5. A mold for producing a food block according to any one of claims 1 to 3, intended to receive pieces of fish meat for compression and agglomeration, characterized in that it comprises a mold body (10) and a mold cover (30) which fits thereinto, means (40) for locking said cover (30) over the mass of pieces of meat within the body of said mold (10) and a core (22) having a generally flattened elliptical-shaped contour for establishing said hollow in the block, and in that said core (22) is fixed in a releasable manner in contact with the base of the body of the mold by one generally rounded end portion of the elliptical-shaped section by means of screws (26) accessible from externally of said body (10) and passing through the transverse outer walls (13) of said body.

6. Mold according to claim 5, characterized in that the locking means (40) consist of a caliper-type arrangement comprising a bar (41) on the ends of which arms (43) carrying serrations pivot the teeth of which engage with inclined members of the body of said mold (10), compression springs (48) being provided between said bar (44) and the cover (30) of the mold.

7. Mold according to claim 5 or 6, characterized in that the core (22) has a generally aerodynamic profile the tail of which terminates, at the end thereof in contact with the mold (extension 23) by means of two bevelled faces (23a and 23b) forming a sharp edge (49) which is applied against the inner edge (20a) of the two inner walls (18 and 19) of the body of the mold (10).

8. A method for producing the food block according to any one of claims 1 to 3, in the mold according to one of claims 3 to 5, characterized in that the block (1) is withdrawn from the body of the mold (10) with the core (22) being retained in the undercut, said core then being extracted by sliding it longitudinally.

## Patentansprüche

1. Nahrungsmittelblock aus Fischfleisch gebildet aus zuvor von Haut und Gräten befreiten Fleischstücken danach durch Druck stückiggemacht, dadurch gekennzeichnet, dass er im wesentlichen die Form eines geraden Prismas aufweist dessen Querprofil (2) die Kontur einer Fischscheibe mit wenigstens einer Längsaushöhlung (4) wiedergibt.

2. Block nach Anspruch 1, dadurch gekennzeichnet, dass diese Aushöhlung der Bauchhöhle entspricht.

3. Block nach Ansprüchen 1 oder 2, dadurch gekennzeichnet, dass die Aushöhlung der Rückengräte entspricht.

4. Scheibe oder Fischscheibe erzielt durch zerschneiden des Blocks nach einem der Ansprüche 1 bis 3.

5. Form zu Herstellung eines Nahrungsmittelblocks nach einem der Ansprüche 1 bis 3 zur Aufnahme der zu komprimierenden und stückig zu machenden Fischfleischstücke, dadurch gekennzeichnet, dass sie einen Formkasten (10) und einen darin eingepassten Formdeckel (30) aufweist, Spannmittel (40) dieses Deckels (30) auf der Fleischstückemasse im Formkasten (10) und einen Kern (22) in der allgemeinen Durchschnittkonturenform einer flachen Ellipse zur Bewerkstelligung der Ausmuldung des Blocks, und dadurch, dass dieser Kern (22) beweglich in Kontakt mit dem Boden des Formkastens durch ein im allgemeinen rundförmigen Endstück des Ellipsenschnitts mit Hilfe von vom Äusseren des Kastens (10) erreichbaren und die querliegenden Stirnwände (13) dieses Kastens durchquerenden Schrauben (26) befestigt ist.

6. Form nach Anspruch 5, dadurch gekennzeichnet, dass die Spannmittel (40) aus einem durch eine Stab (41) gebildeten Bügel bestehen, an dessen Ende mit Zahnstangen (46) versehene Arme (43) angelenkt sind, deren Zähne mit den Rampen (17) des Formkastens (10) greifen, wobei Druckfedern (48) zwischen dem Stab (44) und dem Deckel (30) der Form angebracht sind.

7. Form nach Anspruch 5 oder 6, dadurch gekennzeichnet, dass der Kern (22) die allgemeine Form eines aerodynamischen Profils aufweist deren Endstück auf der mit der Form in Kontakt stehenden Seite (Verlängerung 23) endet in zwei abgeschrägten Seiten (23a und 23b) die eine Kante (49) bilden welche sich auf die innere Kante (20a) der beiden Innenwände (18 und 19) des Formkastens (10) stützt.

8. Herstellungsverfahren des Nahrungsmittelblocks nach einem der Ansprüche 1 bis 3 in der Form nach einen der Ansprüche 3 bis 5, dadurch gekennzeichnet, dass der Block (1) durch den als Hinterschneidung zurückgehaltenen Kern (22) herausgenommen wird, wobei die. Extraktion des Kerns danach durch Längsschiebung erfolgt.
